(19) Europäisches Patentamt
European Patent Office
Office européen des brevets

(11) Veröffentlichungsnummer: **0 438 744 A1**

(12) # EUROPÄISCHE PATENTANMELDUNG

(21) Anmeldenummer: **90124886.4**

(22) Anmeldetag: **20.12.90**

(51) Int. Cl.[5]: **C02F 5/12**, C23F 11/14

(30) Priorität: **23.01.90 DE 4001808**

(43) Veröffentlichungstag der Anmeldung: **31.07.91 Patentblatt 91/31**

(84) Benannte Vertragsstaaten: **BE DE ES FR GB IT SE**

(71) Anmelder: **BASF Aktiengesellschaft**
**Carl-Bosch-Strasse 38**
**W-6700 Ludwigshafen(DE)**

(72) Erfinder: **Gousetis, Charalampos, Dr.**
**Carl-Bosch-Strasse 98**
**W-6700 Ludwigshafen(DE)**
Erfinder: **Goeckel, Ulrich, Dr.**
**Leipziger Strasse 6**
**W-6737 Boehl-Iggelheim(DE)**
Erfinder: **Buechner, Karl-Heinz**
**Kirchfeldring 14a**
**W-6822 Altlussheim(DE)**
Erfinder: **Denzinger, Walter**
**Wormser Landstrassee 65**
**W-6720 Speyer(DE)**
Erfinder: **Hartmann, Heinrich, Dr.**
**Weinheimer Strasse 46**
**W-6703 Limburgerhof(DE)**

(54) **Verwendung von wasserlöslichen Copolymerisaten aus monoethylenisch ungesättigten Carbonsäuren und N-Vinylamiden aus Wasserbehandlungsmittel.**

(57) Verwendung von wasserlöslichen Copolymerisaten, die als charakteristische Monomere

(a) 99 bis 50 Gew.% monoethylenisch ungesättigte Carbonsäuren mit 3 bis 8 C-Atomen oder deren Salze und

(b) 1 bis 50 Gew.% an Monomeren der Formel $CH_2=CH-NR^2-CO-R^1$, in der $R^1$ und $R^2$ = H und $C_1$- bis $C_6$-Alkyl bedeuten,

einpolymerisiert enthalten und die K-Werte von 10 bis 50 haben, sowie von daraus durch Abspaltung von Formylgruppen unter Bildung von Vinylamineinheiten aufweisenden Copolymerisaten als Wasserbehandlungsmittel zur Verminderung der Kesselsteinabscheidung und Wasserhärterausscheidung in wasserführenden Systemen.

EP 0 438 744 A1

# VERWENDUNG VON WASSERLÖSLICHEN COPOLYMERISATEN AUS MONOETHYLENISCH UNGESÄTTIGTEN CARBONSÄUREN UND N-VINYLAMIDEN ALS WASSERBEHANDLUNGSMITTEL

Aus der US-PS 3 810 834 ist bekannt, daß man hydrolysierte Polymaleinsäureanhydride, die vor der Hydrolyse ein Molekulargewicht von 300 bis 5000 haben, oder deren wasserlösliche Salze als Wasserbehandlungsmittel einsetzen kann, um die Kesselsteinbildung weitgehend zu unterdrücken bzw. zu verhindern. Die dafür geeigneten Polymerisate werden durch Polymerisieren von Maleinsäureanhydrid in Toluol unter Verwendung von Benzoylperoxid und anschließende Hydrolyse des so erhaltenen Polymaleinsäureanhydrids hergestellt. Da die Polymerisation des Maleinsäureanhydrids nicht vollständig und die Abtrennung von nichtpolymerisiertem Maleinsäureanhydrid vom Polymerisat schwierig ist, enthalten die Polymaleinsäuren noch beträchtliche Mengen an Maleinsäure.

Aus der US-PS 3 755 264 sind niedrigmolekulare Copolymerisate bekannt, die 85 bis 99 Mol% Maleinsäureanhydrid und zur Ergänzung auf 100 Mol% Acrylsäure, Vinylacetat, Styrol oder deren Mischungen einpolymerisiert enthalten. Die Copolymerisate werden durch Copolymerisieren von Maleinsäureanhydrid in trockenen organischen Lösemitteln mit den genannten Monomeren bei Temperaturen von 100 bis 145 °C in Gegenwart von Peroxiden hergestellt. Als Peroxide kommen beispielsweise Di-tertiär-Butylperoxid, Acetylperoxid, Dicumylperoxid, Diisopropylpercarbonat und insbesondere Benzoylperoxid in Betracht. Die Anhydridgruppen des Copolymerisats können nach der Polymerisation zu Säuregruppen hydrolysiert bzw. in die Salze überführt werden. Die wasserlöslichen Copolymerisate werden zur Verhinderung der Kesselsteinabscheidung verwendet. Die nach diesem Verfahren erhältlichen Produkte weisen einen sehr hohen Gehalt an nicht polymerisiertem Maleinsäureanhydrid auf.

Die Verwendung von niedrigmolekularen Polymerisaten der Acrylsäure zur Wasserbehandlung bzw. als Scale-inhibitor ist beispielsweise aus der US-PS 3 904 522 und der US-PS 3 514 376 bekannt. Aus der US-PS 3 709 816 ist bekannt, daß Acrylamidopropansulfonsäure enthaltende Copolymerisate als Wasserbehandlungsmittel geeignet sind. Beispielsweise kommen Copolymerisate aus 2-Acrylamidopropansulfonsäure und Acrylamid in Betracht, das teilweise hydrolisiert ist. Nachteilig ist dabei, daß unvermeidlich Restmonomeranteile von Acrylamid in den Polymeren verbleiben, wodurch ihre Verwendung nur stark eingeschränkt empfohlen werden kann. Homopolymerisate der Acrylsäure zeigen dagegen befriedigende Wirkung nur gegenüber relativ leicht zu unterdrückenden Belagsarten, wie z.B. Calciumcarbonat.

Der vorliegenden Erfindung liegt die Aufgabe zugrunde, für die Wasserbehandlung solche Polymerisate zur Verfügung zu stellen, die die Wirksamkeit der bisher verwendeten Polymerisate auf Basis von Acrylsäure erreichen oder sogar übertreffen und die gleichzeitig eine bessere Löslichkeit bei hohen Calciumionenkonzentrationen haben als die bisher verwendeten Polyacrylate. Vor allem sollen besonders hartnäckige Belagsprobleme in wasserführenden Systemen, wie die Bildung von Calciumphosphat und die Abscheidung von Silikatniederschlägen, wirksam unterdrückt werden.

Die Aufgabe wird erfindungsgemäß gelöst durch die Verwendung von wasserlöslichen Copolymerisaten, die als charakteristische Monomere

(a) 99 bis 50 Gew.% monoethylenisch ungesättigte Carbonsäuren mit 3 bis 8 C-Atomen oder deren Alkalimetall-, Ammonium- oder Aminsalze und

(b) 1 bis 50 Gew.% an Monomeren der Formel

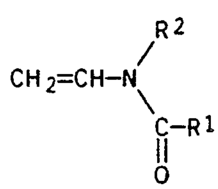

(I),

in der $R^1$, $R^2$ = H oder $C_1$- bis $C_6$-Alkyl bedeuten,

einpolymerisiert enthalten und die K-Werte von 8 bis 50 (bestimmt nach H. Fikentscher in 1%iger wäßriger Lösung bei pH 7 und 25 °C) haben und den daraus durch partielle oder vollständige Abspaltung der Formylgruppe der einpolymerisierten Monomeren der Formel I erhältlichen Vinylamineinheiten aufweisenden Copolymerisaten als Wasserbehandlungsmittel.

Die Copolymerisate werden durch Copolymerisieren der Monomeren in Gegenwart von Polymerisationsinitiatoren hergestellt. Die erfindungsgemäß zu verwendenden Copolymerisate enthalten als charakteristische Monomere der Gruppe (a) monoethylenisch ungesättigte Carbonsäuren mit 3 bis 8 C-Atomen oder

deren Salze einpolymerisiert. Zu diesen Monomeren gehören beispielsweise Acrylsäure, Methacrylsäure, Dimethylacrylsäure, Ethacrylsäure, Maleinsäure, Citraconsäure, Methylenmalonsäure Allylessigsäure, Vinylessigsäure, Crotonsäure, Fumarsäure, Mesakonsäure und Itaconsäure. Aus dieser Gruppe von Monomeren verwendet man vorzugsweise Acrylsäure, Methacrylsäureoder Maleinsäure sowie Mischungen der genannten Carbonsäuren, insbesondere Mischungen aus Acrylsäure und Maleinsäure zur Herstellung der erfindungsgemäß zu verwendenden Copolymerisate. Diese Monomeren können entweder in Form der freien Säuren oder in partiell oder vollständig neutralisierter Form in den Copolymerisaten vorliegen. Diese Monomeren werden gegebenenfalls mit Alkalimetallbasen, Ammoniak oder Aminen neutralisiert. Von den genannten Basen haben Natronlauge, Kalilauge und Ammoniak besondere praktische Bedeutung. Die Neutralisation kann ebenso gut auch mit Aminen, wie Ethanolamin, Diethanolamin oder Triethanolamin vorgenommen werden. Die Monomeren der Gruppe (a) sind zu 99 bis 50, vorzugsweise 95 bis 70 Gew.% am Aufbau der Copolymerisate beteiligt.

Die Copolymerisate enthalten als charakteristische Monomere der Gruppe (b) Verbindungen der Formel

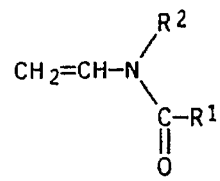

(I)

einpolymerisiert, in der $R^1$ und $R^2$ gleich oder verschieden sein können und H und $C_1$- bis $C_6$-Alkyl bedeuten. Geeignete Verbindungen der Gruppe (b) sind beispielsweise N-Vinylformamid ($R^1 = R^2 = H$ in Formel I), N-Vinyl-N-methylformamid, N-Vinylacetamid, N-Vinyl-N-methylacetamid, N-Vinyl-N-ethylacetamid, N-Vinyl-N-methylpropionamid und N-Vinylpropionamid. Die genannten Monomeren können zur Herstellung der Copolymerisate entweder allein oder in Mischung untereinander der Copolymerisation unterworfen werden. Vorzugsweise verwendet man aus dieser Gruppe von Monomeren N-Vinylformamid. Der Anteil der Monomeren der Gruppe (b) am Aufbau der Copolymerisate beträgt 1 bis 50, vorzugsweise 5 bis 30 Gew.-%.

Die Copolymerisate können zur Modifizierung eine weitere Gruppe von monoethylenisch ungesättigten Monomeren (c) einpolymerisiert enthalten, die mit dem Monomeren (a) und (b) copolymerisierbar sind. Diese Monomeren werden nur in einer solchen Menge in die Copolymerisate aus (a) und (b) einpolymerisiert, daß noch wasserlösliche Copolymerisate vorliegen. Die Menge an Monomeren (c) kann daher in einem weiten Bereich schwanken. Sofern die Monomeren (c) zur Modifizierung in die Copolymerisate einpolymerisiert werden, beträgt ihr Anteil am Aufbau der Copolymerisate bis zu 20 Gew.%. Zur Modifizierung können beispielsweise Ester, Amide und Nitrile der unter (a) angegebenen Carbonsäuren eingesetzt werden. Bevorzugte Verbindungen dieser Art sind beispielsweise Acrylsäuremethylester, Acrylsäureethylester,Methacrylsäuremethylester, Methacrylsäureethylester, Hydroxyethylacrylat, Hydroxypropylacrylat, Hydroxybutylacrylat, Hydroxyethylmethacrylat, Hydroxypropylmethacrylat, Maleinsäuremonomethylester, Maleinsäuredimethylester, Maleinsäuremonoethylester, Maleinsäurediethylester, Acrylamid, Methacrylamid, N-Dimethylacrylamid, N-tert.-Butylacrylamid, Dimethylaminopropylmethacrylamid, Acrylamidoglykolsäure, Acrylnitril und Methacrylnitril. Außerdem eignen sich als Monomere der Gruppe (c) Sulfosäuregruppen enthaltende Monomere, z.B. Vinylsulfonsäure, Allylsulfonsäure, Methallylsulfonsäure, Styrolsulfonsäure, Acrylsäure-(3-sulfopropyl)ester, Methacrylsäure-(3-sulfopropyl)ester und Acrylamidomethylpropansulfonsäure sowie Phosphonsäuregruppen enthaltende Monomere, wie Vinylphosphonat, Allylphosphonat und Acrylamidomethanpropanphosphonsäure. Geeignete Monomere der Gruppe (c) sind außerdem N-Vinylpyrrolidon, N-Vinylcaprolactam, N-Vinyl-2-methylimidazolin, Diallyldiammoniumchlorid, Vinylacetat und Vinylpropionat. Es ist selbstverständlich auch möglich, Mischungen aus den genannten Monomeren der Gruppe (c) einzusetzen, z.B. Acrylester und Vinylacetat oder Acrylamid und Hydroxyethylacrylat. Von den Monomeren der Gruppe (c) die zur Modifizierung der Copolymerisate aus (a) und (b) verwendet werden, kommen Vinylsulfonsäure, Methallylsulfonsäure, Acrylamidomethylpropansulfonsäure, N-Vinylpyrrolidon, Dimethyldiallylammoniumchlorid und Vinylacetat bevorzugt in Betracht. Die Monomeren der Gruppe (c) sind - sofern sie überhaupt zur Modifizierung in den Copolymerisaten aus (a) und (b) enthalten sind - vorzugsweise in Mengen bis zu 15 Gew.% einpolymerisiert.

Besonders bevorzugt ist die Verwendung von Copolymerisaten, die

(a) 95 bis 70 Gew.% Acrylsäure, Methacrylsäure, Maleinsäure oder Mischungen der genannten Carbonsäuren und

(b) 5 bis 30 Gew.% N-Vinylformamid sowie

(c) 0 bis 15 Gew.% Vinylsulfonsäure, Acrylamidomethylpropansulfonsäure, Methallylsulfonsäure, N-Vinylpyrrolidon, Dimethyldiallylammoniumchlorid oder Hydroxypropylacrylat

einpolymerisiert enthalten. Die Copolymerisate werden vorzugsweise in vollständig oder teilweise neutralisierter Form verwendet. Die Copolymerisate haben K-Werte von 8 bis 50, vorzugsweise 10 bis 40 (bestimmt nach H. Fikentscher an 1 gew.%igen Lösungen der Natriumsalze der Copolymerisate bei pH 7 und 25 °C).

Die Copolymerisate können nach allen bekannten kontinuierlichen oder diskontinuierlichen Verfahren der Substanz-, Fällungs-, Suspensions- und Lösungspolymerisation in Gegenwart von Polymerisationsinitiatoren hergestellt werden, die unter den Polymerisationsbedingungen Radikale bilden, z.B. anorganische und organische Peroxide, Persulfate, Azoverbindungen und die sogenannten Redoxkatalysatoren.

Als radikalbildende Initiatoren sind vorzugsweise alle diejenigen Verbindungen geeignet, die bei der jeweils gewählten Polymerisationstemperatur eine Halbwertszeit von weniger als 3 Stunden aufweisen. Falls man die Polymerisation zunächst bei niedrigerer Temperatur startet und bei höherer Temperatur zu Ende führt, so ist es zweckmäßig, mit mindestens 2 bei verschiedenen Temperaturen zerfallenden Initiatoren zu arbeiten, nämlich zunächst einen bereits bei niedrigerer Temperatur zerfallenen Initiator für den Start der Polymerisation einzusetzen und dann die Hauptpolymerisation mit einem Initiator zu Ende zu führen, der bei höherer Temperatur zerfällt. Man kann wasserlösliche sowie wasserunlösliche oder Mischungen von wasserlöslichen und wasserunlöslichen Initiatoren einsetzen. Die in Wasser unlöslichen Initiatoren sind dann in der organischen Phase löslich. Für die im folgenden angegebenen Temperaturbereiche kann man beispielsweise die dafür aufgeführten Initiatoren verwenden.

Temperatur: 40 bis 60 °C:
Acetylcyclohexansulfonylperoxid, Diacetylperoxidicarbonat, Dicyclohexylperoxidicarbonat, Di-2-ethylhexylperoxidicarbonat, tert.-Butylperneodecanoat, 2,2'-Azobis-(4-methoxi-2,4-dimethylvaleronitril), 2,2'-Azobis-(2-methyl-N-phenylpropionamidin)dihydrochlorid, 2,2'-Azobis(2-methylpropionamidin)dihydrochlorid

Temperatur: 60 bis 80 °C:
Tert.-Butylperpivalat, Dioctanoylperoxid, Dilauroylperoxid, 2,2'-Azobis-(2,4-dimethylvaleronitril)

Temperatur: 80 bis 100 °C:
Dibenzoylperoxid, tert.Butylper-2-ethylhexanoat, tert.-Butylpermaleinat, 2,2'-Azobis-(isobutyronitril), Dimethyl-2,2'-azobisisobutyrat, Natriumpersulfat, Kaliumpersulfat, Ammoniumpersulfat.

Temperatur: 100 bis 120 °C:
Bis-(tert.-butylperoxid)-cyclohexan, tert.-Butylperoxiisopropylcarbonat, tert.-Butylperacetat, Wasserstoffperoxid.

Temperatur: 120 bis 140 °C:
2,2-Bis-(tert.-butylperoxi)-butan, Dicumylperoxid, di-tert.-amylperoxid, Di-tert.-butylperoxid

Temperatur: >140 °C:
p-Methanhydroperoxid, Penanhydroperoxid, Cumolhydroperoxid, tert.-Butylhydroperoxid

Verwendet man zusätzlich noch Salze oder Komplexe von Schwermetallen, z.B. Kupfer-, Kobalt-, Mangan-, Eisen-, Nickel- und Chromsalze oder organische Verbindungen wie Benzoin, Dimethylanilin, Ascorbinsäure zusammen mit mindestens einem der oben angegebenen Initiatoren, so können die Halbwertszeiten der angegebenen radikalbildenden Initiatoren verringert werden. So kann man beispielsweise tert.-Butylhydroperoxid unter Zusatz von 5 ppm Kupfer-II-acetylacetonat bereits so aktivieren, daß bereits bei 100 °C polymerisiert werden kann. Die reduzierende Komponente von Redoxkatalysatoren kann auch beispielsweise von Verbindungen wie Natriumsulfit, Natriumbisulfit, Natriumformaldehydsulfoxylat und Hydrazin gebildet werden. Bezogen auf die bei der Polymerisation eingesetzten Monomeren verwendet man 0,01 bis 20, vorzugsweise 0,05 bis 10 Gew.% eines Polymerisa-tionsinitiators oder einer Mischung mehrerer Polymerisationsinitiatoren. Als Redoxkomponenten setzt man 0,01 bis 5 % der reduzierend wirkenden Verbindungen zu. Schwermetalle werden im Bereich von 0,1 bis 100 ppm, vorzugsweise 0,5 bis 10 ppm eingesetzt. Oft ist es von Vorteil, eine Kombination aus Peroxid, Reduktionsmittel und Schwermetall als Redoxkatalysator einzusetzen. Die Copolymerisation der wesentlichen Monomeren (a) und (b) kann auch durch Einwirkung von ultravioletter Strahlung, gegebenenfalls in Gegenwart von UV-Initiatoren, durchgeführt werden. Für das Polymerisieren unter Einwirkung von UV-Strahlen setzt man die dafür üblicherweise in Betracht kommenden Fotoinitiatoren bzw. Sensibilisatoren ein. Hierbei handelt es sich beispielsweise um

Verbindungen wie Benzoin und Benzoinether, α-substituierte Benzoinverbindungen, wie α-Methylolbenzoin und α-Methylolbenzoinether, α-Methylbenzoin oder α-Phenylbenzoin. Auch sogenannte Triplett-Sensibilisatoren, wie Benzyldiketale, können verwendet werden. Als UV-Strahlungsquellen dienen beispielsweise neben energiereichen UV-Lampen, wie Kohlenbogenlampen, Quecksilberdampflampen oder Xenonlampen auch UV-arme Lichtquellen, wie Leuchtstoffröhren mit hohem Blauanteil.

Um Polymerisate mit niedrigem K-Wert herzustellen, wird die Polymerisation zweckmäßigerweise in Gegenwart von Reglern durchgeführt. Geeignete Regler sind beispielsweise Mercaptoverbindungen, wie Mercaptoethanol, Mercaptopropanol, Mercaptobutanol, Mercaptoessigsäure, Mercaptopropionsäure, Butylmercaptan und Dodecylmercaptan. Als Regler eignen sich außerdem Allylverbindungen, wie Allylalkohol, Aldehyde, wie Formaldehyd, Acetaldehyd, Propionaldehyd, n-Butyraldehyd und Isobutyraldehyd, Ameisensäure, Propionsäure, hypophosphorige Säure und phosphorige Säure. Falls die Polymerisation in Gegenwart von Reglern durchgeführt wird, benötigt man davon 0,05 bis 20 Gew.%, bezogen auf die bei der Polymerisation eingesetzten Monomeren. Um Copolymerisate mit K-Werten von 30 bis 50 herzustellen, kann es gegebenenfalls zweckmäßig sein, die Copolymerisation zusätzlich in Gegenwart von Monomeren durchzuführen, die mindestens zwei ethylenisch ungesättigte, nichtkonjugierte Doppelbindungen im Molekül aufweisen. Bei dieser Gruppe von Monomeren handelt es sich beispielsweise um Vernetzer, wie Methylenbisacrylamid, Ester von Acrylsäure und Methacrylsäure mit mehrwertigen Alkoholen, z.B. Glykoldiacrylat, Glycerintriacrylat, Glykoldimethacrylat, Glycerintrimethacrylat, sowie mindestens zweifach mit Acrylsäure oder Methacrylsäure veresterte Polyole ,wie Pentaerythrit und Glukose. Geeignete Vernetzer sind außerdem Divinylbenzol, Divinyldioxan, Pentaerythrittriallylether und Pentaallylsucrose. Falls bei der Copolymerisation Vernetzer eingesetzt werden, so beträgt ihre Menge bis zu 5 Gew.%, bezogen auf die gesamten Monomeren.

Bei der Substanzpolymerisation werden die Monomeren zusammen mit den Radikalbildnern erhitzt, wobei es meistens erforderlich ist, das Reaktionsgut auf Temperaturen oberhalb des Erweichungspunkts zu erhitzen, um die Masse fließfähig zu halten. Zweckmäßigerweise erfolgt die Herstellung kontinuierlich, um die hohe Polymerisationswärme sicher abführen zu können. Dabei werden meistens Polymere mit K-Werten in dem Bereich von 10 bis etwa 30 erhalten. Zur Herstellung von Copolymerisaten mit K-Werten von 30 bis 50 kann man sich der Fällungs- oder Suspensionspolymerisation bedienen. Bei der Fällungspolymerisation sind die Monomeren im Verdünnungsmittel löslich und die gebildeten Copolymeren unlöslich und fallen daher aus. Bei der Suspensionspolymerisation sind Monomere und Polymere im Verdünnungsmittel unlöslich. Um ein Zusammenkleben der Copolymerisatteilchen zu vermeiden, führt man die Copolymerisation zweckmäßigerweise in Gegenwart von Schutzkolloiden durch. Die Copolymerisate können nach Abschluß der Copolymerisation durch Abfiltrieren und Trocknen in fester Form isoliert werden. Die bevorzugte Polymerisationsmethode ist die Lösungspolymerisation, bei der Monomere und Copolymere im Lösemittel gelöst sind. Besonders geeignete Lösemittel für die Lösungspolymerisation sind Wasser, sekundäre Alkohole und Mischungen aus Wasser und sekundären Alkoholen. Sofern man Wasser als Lösemittel verwendet, muß die Polymerisation in Gegenwart von Reglern durchgeführt werden, weil sonst Copolymerisate mit zu hohem K-Wert entstehen. Polymerisiert man dagegen die Monomeren in sekundären Alkoholen, so kann auf die Mitverwendung von Reglern verzichtet werden, weil bekanntlich sekundäre Alkohole regelnd wirken. Bei der Polymerisationin Wasser ist es vorteilhaft, die Polymerisation in einem pH-Wert-Bereich von 4 bis 10, vorzugsweise 5 bis 8, durchzuführen, um eine ungewollte Hydrolyse der Monomeren der Komponente (b) zu vermeiden.

Bei den genannten Polymerisationsverfahren wird die Polymerisation so geführt, daß die Polymerkonzentration des Reaktionsgemisches 5 bis 80, vorzugsweise 10 bis 60 Gew.% beträgt. Die geeigneten Polymerisationstemperaturen betragen 20 bis 250, vorzugsweise 40 bis 180 °C. In der Praxis liegen die besonders bevorzugten Temperaturen bei der Copolymerisation bei 60 bis 130 °C. Sofern die Polymerisationstemperatur oberhalb des Siedepunkts des Lösemittels bzw. Lösemittelgemisches liegt, wird die Copolymerisation unter Druck durchgeführt. Wenn man die Copolymerisation in einem organischen Lösemittel durchführt, wird das Reaktionsgemisch nach Abschluß der Copolymerisation und gegebenenfalls einer Neutralisation einer Wasserdampfdestillation unterworfen, bei der das organische Lösemittel abdestilliert. Selbstverständlich ist es auch möglich, das organische Lösemittel aus dem Reaktionsgemisch abzudestillieren und dann Wasser zuzusetzen, um eine Copolymerisatlösung zu erhalten.

Für die erfindungsgemäße Verwendung kommen auch diejenigen Copolymerisate in Betracht, die durch Hydrolyse, d.h. partielle oder vollständige Abspaltung der Formylgruppen, aus den oben beschriebenen Copolymerisaten erhältlich sind, die die Monomeren der Gruppen (a) und (b) sowie gegebenenfalls zusätzlich noch (c) einpolymerisiert enthalten. Bei der Hydrolyse dieser Copolymerisate werden bis zu 100, beispielsweise 1 bis 100 % der einpolymerisierten Einheiten der Formel

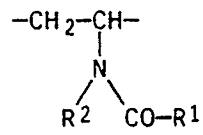

(II),

in der $R^1$ und $R^2$ gleich oder verschieden sein können und H und $C_1$- bis $C_6$-Alkyl, bedeuten, unter Abspaltung der Formylgruppe in Vinylamineinheiten der Formel

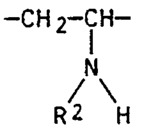

(III),

in der $R^2$ die in Formel II angegebene Bedeutung hat, übergeführt. Bei einer partiellen Hydrolyse eines Copolymerisats aus den Monomeren (a), (b) und gegebenenfalls (c) erhält man Copolymerisate, die außer den einpolymerisiertenMonomeren (a), (b) und gegebenenfalls (c) noch Einheiten der Formel III enthalten. Bei einer vollständigen Hydrolyse der einpolymerisierten Monomeren (b) werden dagegen sämtliche Einheiten der Formel II in Einheiten der Formel III überführt.

Die Hydrolyse der Copolymerisate erfolgt in Gegenwart von Säuren oder Basen bei Temperaturen bis zu 170° C, z.B. in dem Bereich von 20 bis 170° C, vorzugsweise 50 bis 120° C. Der Hydrolysegrad der einpolymerisierten Einheiten der Formel II ist von der Konzentration der dabei eingesetzten Mengen an Säure oder Base und der Temperatur abhängig. Für die Hydrolyse der Copolymerisate eignen sich Mineralsäuren, wie Halogenwasserstoffe, Schwefelsäure, Salpetersäure und Phosphorsäure, sowie organische Säuren, z.B. Essigsäure, Propionsäure, Benzolsulfonsäure und Alkylsulfonsäuren, wie Dodecylsulfonsäure. Von den genannten Säuren verwendet man vorzugsweise Schwefelsäure und Salzsäure. Pro Formylgruppenäquivalent im Copolymerisat benötigt man im allgemeinen 0,05 bis 1,5, vorzugsweise 0,4 bis 1,2 Äquivalente an Säure.

Bei der Hydrolyse der Copolymerisate aus (a), (b) und gegebenenfalls (c) können Metallhydroxide von Metallen der ersten und zweiten Hauptgruppe des Periodensystems der Elemente eingesetzt werden, z.B. Lithiumhydroxid, Natriumhydroxid, Kaliumhydroxid, Calciumhydroxid und Magnesiumhydroxid. Ebenso können als Basen auch Ammoniak und Derivate des Ammoniaks eingesetzt werden, z.B. Triethylamin, Monoethanolamin, Diethanolamin, Triethanolamin und Morpholin. Vorzugsweise verwendet man für die Hydrolyse der Copolymerisate im alkalischen pH-Bereich solche Basen, die üblicherweise im Zusammenhang mit der Anwendung von Belagsverhinderern eingesetzt werden, z.B. Natronlauge, Kalilauge, Ammoniak oder Triethanolamin. Bei der Hydrolyse der Copolymerisate mit Basen beträgt der pH-Wert im allgemeinen 8 bis 14. Die Hydrolyse der Copolymerisate ist in aller Regel nach ca. 1 bis 8, vorzugsweise 2 bis 5 Stunden, beendet. Bei einer sauren Hydrolyse wird das Reaktionsgemisch nach Abschluß der Hydrolyse auf die für Belagsverhinderer üblichen pH-Werte in dem Bereich von 7 bis 10 eingestellt. Erfindungsgemäß zu verwendende hydrolysierte Copolymerisate sind beispielsweise auch dadurch erhältlich, daß man Copolymerisate aus $C_1$- bis $C_8$-Alkylestern von ethylenisch ungesättigten $C_3$- bis $C_8$-Carbonsäuren und einem Monomer der Gruppe (b), wie N-Vinylformamid, und gegebenenfalls (c) hydrolysiert. Dabei entstehen nämlich aus den einpolymerisierten Alkylestern der ethylenisch ungesättigten $C_3$- bis $C_8$-Carbonsäure die den jeweiligen einpolymerisierten Estereinheiten zugrundeliegenden Einheiten der einpolymerisierten Säuren sowie aus den einpolymerisierten Einheiten der Formel II die Einheiten der Formel III, wobei je nach Hydrolysegrad Einheiten der Formel II neben Einheiten der Formel III im Copolymerisat vorhanden sein können.

Die so erhältlichen wäßrigen Copolymerisatlösungen können direkt als Wasserbehandlungsmittel zur Verminderung der Kesselsteinabscheidung und der Wasserhärteausscheidung in wasserführenden Systemen verwendet werden. Möglich ist die Kombination der erfindungsgemäßen Polymeren mit anderen Dispergiermitteln, wie Phosphonaten, Phosphonoalkancarbonsäuren etc.

Die Wirkungsweise der Copolymerisate als sog. Belagsverhinderer für die Wasserbehandlung besteht darin, die Bildung von Kristallen der Härtebildnersalze, wie Calciumcarbonat, Magnesiumoxid, Magnesiumcarbonat, Calcium-, Barium- oder Strontiumsulfat, Calciumphosphat (Apatit) und ähnliche im unterstöchiometrischen Dosierungsbereich zu verhindern oder die Bildung dieser Niederschläge so zu beeinflussen, daß keine harten und steinartigen Beläge entstehen, sondern leicht ausschwemmbare, im Wasser fein verteilte Ausscheidungen gebildet werden. Auf diese Weise werden die Oberflächen von z.B. Wärmeaustauschern,

Rohren oder Pumpenbauteilen von Belägen freigehalten und deren Korrosionsneigung vermindert. Insbesondere wird die Gefahr von Lochfraßkorrosion unter diesen Belägen verringert. Ferner wird das Aufwachsen von Mikroorganismen auf diesen Metalloberflächen erschwert. Durch den Einfluß der Belagsverhinderer kann die Lebensdauer von solchen Anlagen erhöht und Stillstandzeiten zur Reinigung von Anlagenteilen erheblich reduziert werden. Die hierzu benötigten Mengen von Belagsverhinderer betragen 0,1 bis 100, vorzugsweise 0,5 bis 25 ppm, bezogen auf die jeweilige Wassermenge. Bei den wasserführenden Systemen handelt es sich z.B. um offene oder geschlossene Kühlkreisläufe, beispielsweise von Kraftwerken oder chemischen Anlagen, wie Reaktoren, Destillationsapparaturen und ähnlichen Bauteilen, bei denen Wärme abgeführt werden muß. Der Einsatz dieser Belagsverhinderer kann auch in Boilerwässern und Dampferzeugern, vorzugsweise im Bereich von Wassertemperaturen unterhalb 150 °C erfolgen. Eine bevorzugte Anwendung der erfindungsgemäß zu verwendenden Belagsverhinderer ist ferner die Entsalzung von Meer- und Brackwasser durch Destillation oder Membranverfahren, wie z.B. die umgekehrte Osmose oder Elektrodialyse. So wird z.B. beim sog. MFS-Destillationsverfahrens (Multistage Flash Evaporation) zur Meerwasserentsalzung eingedicktes Meerwasser mit erhöhter Temperatur im Umlauf gefahren. Die Belagsverhinderer unterbinden dabei wirksam die Ausscheidung von Härtebildnern, wie z.B. Brucit und deren Anbacken an Anlagebauteile.

Bei Membranverfahren kann die Schädigung der Membranen durch auskristallisierende Härtebildner wirksam verhindert werden. Auf diese Weise ermöglichendiese Belagsverhinderer höhere Eindickungsfaktoren, verbesserte Ausbeute an Reinwasser und längere Lebensdauer der Membranen. Eine weitere Anwendung der Belagsverhinderer ist z.B. beim Eindampfen von Zuckersäften aus Rohr- oder Rübenzucker gegeben. Im Gegensatz zu oben beschriebenen Anwendungen werden hier dem Zuckerdünnsaft zur Reinigung z.B. Calciumhydroxid, Kohlendioxid, Schwefeldioxid oder gegebenenfalls Phosphorsäure zugesetzt. Nach Filtration im Zuckersaft verbleibende schwerlösliche Calciumsalze, wie z.B. Calciumcarbonat, -sulfat oder -phosphat, fallen dann während des Eindampfprozesses aus und können als steinharte Beläge auf Wärmetauscheroberflächen auftreten. Dies gilt ebenso auch für Zuckerbegleitstoffe, wie Kieselsäure oder Calciumsalze organischer Säuren, wie z.B. Oxalsäure.

Ähnliches gilt für Verfahren, die sich an die Zuckergewinnung anschließen, so z.B. die Alkoholgewinnung aus Rückständen der Zuckerproduktion.

Die erfindungsgemäß als Belagsverhinderer einsetzbaren Copolymerisate sind in der Lage, die obengenannten Belagsbildungen weitgehend zu unterbinden, so daß Stillstandszeiten der Anlagen zur Reinigung, z.B. durch Auskochen, entscheidend verringert werden können. Ein wesentlicher Gesichtspunkt hierbei ist ferner die beträchtliche Energieeinsparung durch Vermeidung der genannten wärmeisolierenden Beläge.

Die in den beschriebenen Anwendungen nötigen Mengen des Belagsverhinderers sind unterschiedlich, betragen jedoch zwischen 0,1 und 100 ppm, bezogen auf eingesetztes Kühlwasser, Boilerwasser, Prozeßwasser oder z.B. Zuckersaft.

Die erfindungsgemäß zu verwendenden Produkte weisen eine bessere Dispergierung gegenüber Härtebildnersalzen, wie Ca-Carbonat, Ca-Sulfat und Ca-Phosphat auf und sind ferner besser verträglich mit Ca-Ionen als Homopolymerisate der Acrylsäure.

Die K-Werte der Copolymerisate wurden nach H. Fikentscher, Cellulosechemie, Band 13, 48 bis 64 und 71 bis 74 (1932) in wäßriger Lösung bei einem pH-Wert von 7, einer Temperatur von 25 °C und einer Polymerkonzentration des Natriumsalzes des Copolymerisats von 1 Gew.% bestimmt. Die Angaben in Prozent beziehen sich auf das Gewicht der Stoffe.

## Beispiele

### Herstellung der Copolymerisate

#### Copolymerisat 1

In einem Polymerisationsreaktor aus Edelstahl, der für das Arbeiten unter Druck ausgelegt ist, werden 1250 g Isopropanol vorgelegt. Der Reaktor wird dann dreimal mit Stickstoff bis zu einem Druck von 3 bar abgepreßt und wieder entspannt. Danach wird druckdicht verschlossen. Der Reaktorinhalt wird dann unter Rühren auf eine Temperatur von 120 °C erhitzt. Sobald diese Temperatur erreicht ist, werden 1081,5 g Acrylsäure und eine Lösung von 118,5 g N-Vinylformamid in 200 g Isopropanol innerhalb von 4 Stunden und einer Lösung von 36 g Di-tert.-butylperoxid in 200 g Isopropanol innerhalb von 5 Stunden gleichmäßig zudosiert. Anschließend wird das Reaktionsgemisch noch 2 Stunden bei 130 °C nacherhitzt und dann unter Abdestillieren eines Teils des Isopropanols entspannt und mit 600 g Wasser verdünnt. Das restliche Isopropanol wird anschließend durch Einleiten von Wasserdampf aus dem Reaktionsgemisch abdestilliert,

bis eine Siedetemperatur von 100 °C erreicht ist. Danach kühlt man das Reaktionsgemisch auf 50 °C ab und gibt 825 g 50 %ige wäßrige Natronlauge bis zu einem pH-Wert von 7,5 zu. Die neutralisierte wäßrige Copolymerisatlösung besitzt einen Feststoffgehalt von 41,1 %. Das Copolymerisat hat einen K-Wert von 25,4.

Copolymerisat 2

In dem oben beschriebenen Polymerisationsreaktor werden 1250 g Isopropanol unter Rühren bis zum Sieden auf ca. 82 °C erhitzt. Dann gibt man innerhalb von 3 Stunden 602 g Acrylsäure, eine Lösung von 148 g N-Vinylformamid in 250 g Isopropanol und eine Lösung von 22,5 g tert.-Butylperethylhexanoat in 250 g Isopropanol gleichmäßig zu und erhitzt das Reaktionsgemisch zum Sieden. Nach Beendigung der Initiatorzugabe wird das Reaktionsgemisch noch 2 Stunden zum Sieden erhitzt und danach mit 300 g Wasser verdünnt. Durch Einleiten von Wasserdampf in das Reaktionsgemisch wird anschließend das Isopropanol abdestilliert, bis die Siedetemperatur 100 °C beträgt. Die wäßrige Copolymerisatlösung wird abgekühlt und mit 620 g 50 %iger wäßriger Natronlauge neutralisiert. Die so erhaltene wäßrige Copolymerisatlösung besitzt einen Feststoffgehalt von 49,3 % und hat einen pH-Wert von 7,1. Der K-Wert des Copolymerisates beträgt 21,4.

Copolymerisat 3

Beispiel 1 wird mit den Ausnahmen wiederholt, daß man die Copolymerisation bei einer Temperatur von 130 °C durchführt und die Wasserdampfdestillation so vornimmt, daß man eine wäßrige Copolymerisatlösung mit einem Feststoffgehalt von 52,9 % bei einem pH-Wert von 7,2 erhält. Der K-Wert des Copolymerisates beträgt 16,3.

Copolymerisat 4

Man verfährt wie in Beispiel 3 beschrieben, kühlt das Reaktionsgemisch nach der Wasserdampfdestillation auf eine Temperatur von 50 °C ab und fügt innerhalb von 10 Minuten 130 g konz. Schwefelsäure zu und erhitzt das Reaktionsgemisch zur Hydrolyse 2 Stunden unter Rühren bei einer Temperatur von 50 °C. Danach dosiert man 1100 g 50 %iger wäßriger Natronlauge zu, so daß sich ein pH-Wert von 7,0 einstellt. Die N-vinylformamid-Einheiten des Copolymerisats wurden während der Hydrolyse vollständig in Vinylamin-Einheiten überführt. Man erhielt eine wäßrige Lösung eines Copolymerisatsalzes mit einem Feststoffgehalt von 51,2 %. Der K-Wert des hydrolysierten Copolymerisates betrug 14,2.

Die oben beschriebenen Copolymerisate wurden auf ihre Eignung aus Wasserbehandlungsmittel folgenden Testen unterworfen:

$CaSO_4$-Test

500 ml einer gesättigten $CaSO_4$-Lösung wird bei 200 °C im Trockenschrank auf 200 g eingedampft. Man läßt die Mischung über Nacht stehen und filtriert am nächsten Tag durch einen Membranfilter (0,45 µm).

50 ml des Filtrats wird mit einer wäßrigen 0,2 M-Lösung von $Na_2H_2$ EDTA (EDTA = Ethylendiamintetraessigsäure) titriert und der noch gelöste Ca-Anteil bestimmt. Die Inhibierung bei Zugabe von 1 ppm Polymer wird berechnet gegen einen Blindversuch ohne Polymerzugabe.

$$\text{\% Inhibierung: } 100 \left(1 - \frac{\text{mg } CaSO_4 \text{ auf Filter (mit 1 ppm Polymer)}}{\text{mg } CaSO_4 \text{ auf Filter (Blindversuch ohne Polymer)}}\right)$$

$CaCO_3$-Test

Es wird eine wäßrige Prüflösung aus den Komponenten A und B hergestellt:

A : 3,36 g $NaHCO_3$/l

B : 1,58 g $CaCl_2$ $2H_2O$/l 0,88 g $MgSO_4$/l

Je 100 ml der obigen Lösungen A und B werden in eine 250-ml-Flasche pipettiert mit 5 ppm Dispergiermittel versetzt, zugeschlossen und 16 Stunden bei 86° C gelagert. Nach Abkühlen auf Raumtemperatur und Filtration wird die Lösung mit einer 0,2 M-Lösung von $Na_2H_2$ EDTA titriert.

$$\%\ \text{Inhibierung: } 100 \cdot \left(1 - \frac{\text{mg CaO auf Filter (mit Polymer)}}{\text{mg CaO auf Filter (Blindversuch ohne Polymer)}}\right)$$

$Ca_3(PO_4)_2$-Test

Es werden 100 ml einer Lösung mit folgenden Konzentrationen hergestellt:
1,095 g/l $CaCl_2 \cdot 6H_2O$
0,019 g/l $Na_2HPO_4 \cdot 2H_2O$
2 ppm Polymer
Der pH-Wert wird mit einem Borax-Puffer auf 8,6 eingestellt. Die Lösung wird nun 3 Stunden bei 70° C gerührt und 24 Stunden stehen gelassen. Nach dieser Zeit wird die Lichtdurchlässigkeit (LD, Weißlicht) mit einem Photometer gemessen. Der Photometer wird vorher mit destilliertem Wasser auf 100 % LD eingestellt.

$$\%\ \text{Inhibierung:} \left(1 - \frac{100 - \text{LD mit 2 ppm Polymer}}{100 - \text{LD einer Blindprobe ohne Polymer}}\right) \times 100$$

Ca-Ionenverträglichkeit

Es werden 200 ml einer Lösung mit folgender Zusammensetzung hergestellt:
1,565 g $CaCl_2 \cdot 6H_2O$/l
3 g KCl/l
45 ppm Polymer
Der pH-Wert wird mit NaOH auf 9 eingestellt und die Lösung anschließend 30 Minuten gekocht. Die abgekochte Lösung wird nun mit destilliertem Wasser auf 200 ml aufgefüllt und die Lichtdurchlässigkeit (LD) gemessen (LD für dest. Wasser = 100 %). Je höher der LD-Wert desto besser ist die Verträglichkeit des Produktes gegenüber Ca-Ionen.

Die Prüfergebnisse sind in der Tabelle angegeben.

| Beisp. | Copolymerisat Nr. | K-Wert | % Inhibierung $CaSO_4$ | $CaCO_3$ | $Ca_3(PO_4)_2$ | LD % (Polymertrübung) |
|---|---|---|---|---|---|---|
| 1 | 1 | 25,4 | 68 | 47 | 79 | 99 |
| 2 | 2 | 21,4 | 43 | 49 | 58 | 95 |
| 3 | 3 | 16,3 | 40 | 23 | 54 | 97 |
| 4 | 4 | 14,2 | 41 | 20 | 69 | 90 |
| Vergleichsbeispiel 1 (Homopolymerisat der Acrylsäure) | | 30 | 29 | 45 | 61 | <60 |

Wie aus der Tabelle ersichtlich ist, hat das Copolymerisat 1 bei allen Tests eine verbesserte Wirksamkeit gegenüber dem Homopolymerisat der Acrylsäure. Dieses Copolymerisat ist insbesondere zur Behandlung von solchen wasserführenden Systemen geeignet, die hohe Ca-Ionenkonzentrationen aufweisen, z.B. bei der Zuckersafteindampfung.

Die Copolymerisate 2 und 4 sind bei 3 von 4 Tests besser als das Homopolymerisat der Acrylsäure.

## Patentansprüche

**1.** Verwendung von wasserlöslichen Copolymerisaten, die als charakteristische Monomere

(a) 99 bis 50 Gew.% monoethylenisch ungesättigte Carbonsäuren mit 3 bis 8 C-Atomen oder deren Alkalimetall-, Ammonium- oder Aminsalze und

(b) 1 bis 50 Gew.% an Monomeren der Formel

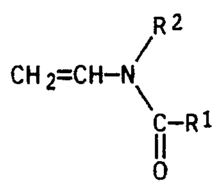

(I),

in der $R^1$, $R^2$ = H oder $C_1$- bis $C_6$-Alkyl bedeuten,
einpolymerisiert enthalten und die K-Werte von 8 bis 50 (bestimmt nach H. Fikentscher in 1%iger wäßriger Lösung bei pH 7 und 25 °C) haben und den daraus durch partielle oder vollständige Abspaltung der Formylgruppen der einpolymerisierten Monomeren der Formel I erhältlichen Vinylamineinheiten aufweisenden Copolymerisaten als Wasserbehandlungsmittel.

**2.** Verwendung nach Anspruch 1, dadurch gekennzeichnet, daß die Copolymerisate als weitere Gruppe von Monomeren

(c) 0 bis 20 Gew.% andere, mit den Monomeren (a) und (b) copolymerisierbare monoethylenisch ungesättigte Monomere

einpolymerisiert enthalten.

**3.** Verwendung nach Anspruch 1 oder 2, dadurch gekennzeichnet, daß die Copolymerisate

(a) 95 bis 70 Gew.% Acrylsäure, Methacrylsäure, Maleinsäure oder deren Gemische und

(b) 5 bis 30 Gew.% N-Vinylformamid

einpolymerisiert enthalten.

**4.** Verwendung nach Anspruch 3, dadurch gekennzeichnet, daß die im Copolymerisat enthaltenen N-VinylFormamid-Einheiten zu 1 bis 100 % in Vinylamineinheiten umgewandelt sind.

**5.** Verwendung der Copolymerisate nach einem der Ansprüche 1 bis 4, dadurch gekennzeichnet, daß die

Copolymerisate in Mengen von 0,1 bis 100 ppm, bezogen auf das zu behandelnde wäßrige Medium, eingesetzt werden.

6. Verwendung der Copolymerisate nach einem der Ansprüche 1 bis 5 in wasserführenden Systemen als Belagsverhinderer.

Europäisches Patentamt

# EUROPÄISCHER RECHERCHENBERICHT

Nummer der Anmeldung

**EP 90 12 4886**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | US-A-4 711 726 (PIERCE et al.)<br>* Das ganze Dokument * | 1,3,5,6 | C 02 F 5/12<br>C 23 F 11/14 |
| X | US-A-4 740 314 (KNELLER)<br>* Spalte 1, Zeile 61; Spalte 1, Zeile 65 - Spalte 3, Zeile 30; Ansprüche * | 1,2,5,6 | |
| X | DATABASE WPIL, Accession Nr. 84-303758 [49], Derwent Publications Ltd, Londen, GB;<br>& JP-A-59 189 175<br>& JP-A-63 036 637 (NITTO KASEI) | 1 | |
| A | PATENT ABSTRACTS OF JAPAN, Band 10, Nr. 208 (C-361), 22. Juli 1986;<br>& JP-A-61 051 007 (MITSUBISHI CHEM. IND.) 13-03-1986 | 1 | |
| A | PATENT ABSTRACTS OF JAPAN, Band 12, Nr. 209 (C-504), 15. Juni 1988;<br>& JP-A-63 010 609 (MITSUBISHI CHEM. IND.) 18-01-1988 | 1 | |

RECHERCHIERTE SACHGEBIETE (Int. Cl.5)

C 02 F

Der vorliegende Recherchenbericht wurde für alle Patentansprüche erstellt

| Recherchenort | Abschlußdatum der Recherche | Prüfer |
|---|---|---|
| Den Haag | 25 April 91 | KASPERS H.M.C. |

KATEGORIE DER GENANNTEN DOKUMENTE

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze

E: älteres Patentdokument, das jedoch erst am oder nach dem Anmeldedatum veröffentlicht worden ist
D: in der Anmeldung angeführtes Dokument
L: aus anderen Gründen angeführtes Dokument

&: Mitglied der gleichen Patentfamilie, übereinstimmendes Dokument